# EUROPEAN PATENT APPLICATION

(11) **EP 4 564 194 A1**
(43) Date of publication of application: **04.06.2025**
(21) Application number: 23856319.1
(22) Date of filing: 03.07.2023
(51) Int. Cl.: G06F 16/901

(54) **METHOD AND APPARATUS FOR PROCESSING COMPLEX GRAPH ALGORITHM, AND COMPUTING DEVICE**

(30) Priority: 26.08.2022 CN 202211033506
(71) Applicant: Huawei Technologies Co., Ltd., Shenzhen, Guangdong 518129 (CN)
(72) Inventor: FAN, Qiushi, Shenzhen, Guangdong 518129 (CN); ZHOU, Minqi, Shenzhen, Guangdong 518129 (CN); LUO, Zhenghai, Shenzhen, Guangdong 518129 (CN); ZHU, Yanchao, Shenzhen, Guangdong 518129 (CN)
(74) Representative: Gill Jennings & Every LLP
(86) International application number: PCT/CN2023/105484
(87) International publication number: WO 2024/041229

(57) **Abstract**

A complex graph algorithm processing method and apparatus, and a computing device are provided. The method includes: A graph database receives a request that is for a complex graph algorithm and that is sent by a user, where the request is used to obtain a computation result of the complex graph algorithm; the graph database converts, based on the request for the complex graph algorithm, the complex graph algorithm into a physical plan including n graph operators, where each graph operator represents one matrix operation, and n is an integer greater than or equal to 1; and the graph database performs n matrix operations corresponding to the n graph operators in the physical plan, to obtain the computation result of the graph algorithm. According to the method, the database has good scalability in processing the complex graph algorithm.

## Description

This application claims priority to Chinese Patent Application No. 202211033506.3, filed with the China National Intellectual Property Administration on August 26, 2022 and entitled "GRAPH PROCESSING METHOD AND APPARATUS, AND COMPUTING DEVICE", which is incorporated herein by reference in its entirety.

### TECHNICAL FIELD

This application relates to the database field, and more specifically, to a complex graph algorithm processing method and apparatus, and a computing device.

### BACKGROUND

A graph database is a data management system that uses vertices and edges as basic storage units and is designed to efficiently store and query graph data. Compared with a relational database, the graph database can naturally express entities and a relationship between the entities in the real world.

In an existing graph database, different graph analysis algorithms may be supported, and a graph processing request sent by a user is processed according to the graph analysis algorithm. In other words, in the existing graph database, after the graph processing request sent by the user is obtained, a graph analysis algorithm is determined from a plurality of existing graph analysis algorithms based on a type of the graph processing request, and the graph processing request is processed according to the graph analysis algorithm.

In the foregoing existing graph database, because types and a quantity of supported graph analysis algorithms are fixed, the existing graph database may determine only one graph analysis algorithm from the existing graph analysis algorithms, and process the graph processing request according to the graph analysis algorithm. Consequently, scalability is poor.

Therefore, how to improve scalability of the graph database becomes an urgent technical problem to be resolved.

### SUMMARY

This application provides a complex graph algorithm processing method and apparatus, and a computing device. The method can enable a database to have good scalability in processing a complex graph algorithm.

According to a first aspect, a complex graph algorithm processing method, including: a graph database receives a request that is for a complex graph algorithm and that is sent by a user, where the request is used to obtain a computation result of the complex graph algorithm; the graph database converts, based on the request for the complex graph algorithm, the complex graph algorithm into a physical plan including n graph operators, where each graph operator represents one matrix operation, and n is an integer greater than or equal to 1; and the graph database performs n matrix operations corresponding to the n graph operators in the physical plan, to obtain the computation result of the graph algorithm.

In the foregoing technical solution, the graph database may obtain, in real time based on requests of different complex graph algorithms, the execution plan corresponding to the request of the complex graph algorithm, and the execution plan is including the n graph operators. Therefore, the database has good scalability in the complex graph algorithm.

With reference to the first aspect, in some implementations of the first aspect, the physical plan further includes an execution sequence of the n graph operators.

With reference to the first aspect, in some implementations of the first aspect, the first graph data includes attribute data, the execution plan further includes a relational operator, and the relational operator is configured to process the attribute data.

With reference to the first aspect, in some implementations of the first aspect, the physical plan includes a first graph operator and a second graph operator, an output matrix of the first graph operator is an input matrix of the second graph operator, and a data format of the output matrix of the first graph operator is the same as a data format of the input matrix of the second graph operator.

With reference to the first aspect, in some implementations of the first aspect, the output matrix of the first graph operator is stored in the first storage space in a matrix compression manner.

With reference to the first aspect, in some implementations of the first aspect, the first storage space includes at least one vertex array and at least one edge array, the vertex array includes identifiers IDs of a plurality of vertices in a graph corresponding to the first graph data, and the edge array includes an edge starting from each vertex.

With reference to the first aspect, in some implementations of the first aspect, the matrix is stored in the second storage space in the matrix compression manner.

With reference to the first aspect, in some implementations of the first aspect, the second storage space includes at least one vertex array and at least one edge array, the vertex array includes IDs of a plurality of vertices in a graph corresponding to the matrix, each vertex corresponds to one edge array, and the edge array is stored in the second storage space in a form of a linked list.

With reference to the first aspect, in some implementations of the first aspect, the complex graph algorithm includes the first graph data, the first graph data includes attribute data and topology data, the attribute data represents an attribute of a vertex or an edge in the graph corresponding to the first graph data, and the topology data represents an association relationship between the vertices in the graph.

With reference to the first aspect, in some implementations of the first aspect, the graph database receives, via a client, the request that is for the complex graph algorithm and that is sent by the user.

With reference to the first aspect, in some implementations of the first aspect, the method further includes: The graph database returns the computation result of the graph algorithm to the user via the client.

According to a second aspect, a complex graph algorithm processing apparatus is provided. The apparatus includes a receiving module, a generation module, and an execution module. The receiving module is configured to receive a request that is for a complex graph algorithm and that is sent by a user, where the request is used to obtain a computation result of the complex graph algorithm. The generation module is configured to convert, based on the request for the complex graph algorithm, the complex graph algorithm into a physical plan including n graph operators, where each graph operator represents one matrix operation, and n is an integer greater than or equal to 1. The execution module is configured to perform n matrix operations corresponding to the n graph operators in the physical plan, to obtain the computation result of the graph algorithm.

With reference to the second aspect, in some implementations of the second aspect, the physical plan further includes an execution sequence of the n graph operators.

With reference to the second aspect, in some implementations of the second aspect, the first graph data includes attribute data, the execution plan further includes a relational operator, and the relational operator is configured to process the attribute data.

With reference to the second aspect, in some implementations of the second aspect, the physical plan includes a first graph operator and a second graph operator, an output matrix of the first graph operator is an input matrix of the second graph operator, and a data format of the output matrix of the first graph operator is the same as a data format of the input matrix of the second graph operator.

With reference to the second aspect, in some implementations of the second aspect, the output matrix of the first graph operator is stored in the first storage space in a matrix compression manner.

With reference to the second aspect, in some implementations of the second aspect, the first storage space includes at least one vertex array and at least one edge array, the vertex array includes identifiers IDs of a plurality of vertices in a graph corresponding to the first graph data, and the edge array includes an edge starting from each vertex.

With reference to the second aspect, in some implementations of the second aspect, the matrix is stored in second storage space in the matrix compression manner.

With reference to the second aspect, in some implementations of the second aspect, the second storage space includes at least one vertex array and at least one edge array, the vertex array includes IDs of a plurality of vertices in a graph corresponding to the matrix, each vertex corresponds to one edge array, and the edge array is stored in the second storage space in a form of a linked list.

With reference to the second aspect, in some implementations of the second aspect, the complex graph algorithm includes the first graph data, the first graph data includes attribute data and topology data, the attribute data represents an attribute of a vertex or an edge in the graph corresponding to the first graph data, and the topology data represents an association relationship between the vertices in the graph.

With reference to the second aspect, in some implementations of the second aspect, the receiving module is specifically configured to receive, via a client, the request that is for the complex graph algorithm and that is sent by the user.

With reference to the second aspect, in some implementations of the second aspect, the apparatus further includes: a sending module, configured to return the computation result of the graph algorithm to the user via the client.

According to a third aspect, a computing device is provided. The computing device includes a processor and a storage, and optionally, further includes an input/output interface. The processor is configured to control the input/output interface to send and receive information, the storage is configured to store a computer program, and the processor is configured to invoke the computer program from the storage and run the computer program, so that the method according to the first aspect or any possible implementation of the first aspect is performed.

Optionally, the processor may be a general-purpose processor, and may be implemented through hardware or software. When the processor is implemented through hardware, the processor may be a logic circuit, an integrated circuit, or the like. When the processor is implemented through software, the processor may be a general-purpose processor, and is implemented by reading software code stored in the storage. The storage may be integrated into the processor, or may be located outside the processor and exist independently.

According to a fourth aspect, a computing device cluster is provided, including at least one computing device. Each computing device includes a processor and a storage. The processor of the at least one computing device is configured to execute instructions stored in the storage of the at least one computing device, so that the computing device cluster performs the method according to the first aspect or any possible implementation of the first aspect.

According to a fifth aspect, a chip is provided. The chip obtains instructions and executes the instructions to implement the method according to the first aspect or any implementation of the first aspect.

Optionally, in an implementation, the chip includes a processor and a data interface. The processor reads, through the data interface, instructions stored in a storage, to implement the method in the first aspect or any implementation of the first aspect.

Optionally, in an implementation, the chip may further include a storage, where the storage stores instructions. The processor is configured to execute the instructions stored in the storage. When the instructions are executed, the processor is configured to implement the method according to the first aspect or any implementation of the first aspect.

According to a sixth aspect, a computer program product including instructions is provided. When the instructions are run by a computing device, the computing device is enabled to perform the method according to the first aspect and any implementation of the first aspect.

According to a seventh aspect, a computer program product including instructions is provided. When the instructions are run by a computing device cluster, the computing device cluster is enabled to perform the method according to the first aspect and any implementation of the first aspect.

According to an eighth aspect, a computer-readable storage medium is provided, including computer program instructions. When the computer program instructions are executed by a computing device, the computing device performs the method according to the first aspect and any implementation of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

According to a ninth aspect, a computer-readable storage medium is provided, including computer program instructions. When the computer program instructions are executed by a computing device cluster, the computing device cluster performs the method according to the first aspect and any implementation of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

### BRIEF DESCRIPTION OF DRAWINGS

FIG. 1 is a schematic flowchart of a complex graph algorithm processing method in a graph database according to an embodiment of this application;
FIG. 2 is a block diagram of matrix compression storage according to an embodiment of this application;
FIG. 3 is a block diagram of a router service scenario according to an embodiment of this application;
FIG. 4 is a block diagram of a graph mode according to an embodiment of this application;
FIG. 5 is a block diagram of an execution plan formulated for a first layer in the graph mode shown in FIG. 4 according to an embodiment of this application;
FIG. 6 is a diagram of two input matrices of a SpGEMM graph operator according to an embodiment of this application;
FIG. 7 is a block diagram of an intermediate result set according to an embodiment of this application;
FIG. 8 is a block diagram of another intermediate result set according to an embodiment of this application;
FIG. 9 is a diagram of two input matrices of another SpGEMM graph operator according to an embodiment of this application;
FIG. 10 is a block diagram of another intermediate result set according to an embodiment of this application;
FIG. 11 is a block diagram of another intermediate result set according to an embodiment of this application;
FIG. 12 is a block diagram of a connected path instance according to an embodiment of this application;
FIG. 13 is a block diagram of an execution plan constructed for the graph pattern shown in FIG. 4 according to an embodiment of this application;
FIG. 14 is a block diagram of a complex graph algorithm processing apparatus 1400 according to an embodiment of this application;
FIG. 15 is a diagram of an architecture of a computing device 1500 according to an embodiment of this application;
FIG. 16 is a diagram of an architecture of a computing device cluster according to an embodiment of this application; and
FIG. 17A and FIG. 17B are a diagram of a connection between a computing device 1500A and a computing device 1500B through a network according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

The service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

For ease of understanding, terms and concepts related to embodiments of this application are first described.

### 1. Graph (graph)

The graph is an abstract data structure used to represent an association relationship between objects, and may be described by using a vertex (Vertex) and an edge (Edge). In other words, the graph is a set of vertices and edges. A vertex represents an object, entity, or instance, for example, a person, an enterprise, an account, or any other item to be tracked. An edge represents a relationship between objects (or entities, or instances). The edge may be directed or undirected. In an undirected graph, an edge connecting two vertices has a single meaning. In a directed graph, edges connecting two different vertices have different meanings based on directions of the edges. The edge is a key concept in a graph database and is a unique data abstraction concept of the graph database.

### 2. Graph data

The graph data may be abstracted as data described through a graph, and the graph data may include attribute data and topology data. The attribute data represents an attribute of a vertex or an edge in the graph, and the attribute data may also be referred to as data for short. The topology data is an association relationship between two vertices in the graph, and the topology data may also be referred to as a topology for short.

### 3. Graph database

The graph database is a data management system that uses vertices and edges as basic storage units and is designed to efficiently store and query graph data. Compared with a relational database, the graph database can naturally express entities and a relationship between the entities in the real world. Therefore, the graph database is widely used in the fields of a social network, real-time recommendation, a credit investigation system, artificial intelligence, and the like.

In the graph database, a relationship between data is as important as the data itself, and the relationship is stored as a part of the data. Because the relationship between the entities has been stored in the database in advance, such an architecture enables the graph database to quickly respond to a complex associated query. The graph database visualizes the relationship and is the best way to store, query, and analyze highly interconnected data.

The graph database is a non-relational database. The graph database differs greatly from a relational database in data storage, query, and data structure. In the data structure, the graph database directly stores a dependency relationship between nodes, but the relational database and another type of non-relational database indirectly represent a relationship between data. The graph database stores an association between data as a part of data. A label, a direction, and an attribute may be added to the association. However, a query for the relationship in other databases needs to be specifically performed during running. This is why the graph database has a great performance advantage over other types of databases in the query for the relationship.

### 4. Graph processing (graph processing)

Data is modeled in a graph manner to obtain a result that is difficult to obtain from a flattened perspective. The graph processing is a process in which a graph is used as a data model to express and resolve a problem.

In an existing graph database, different graph analysis algorithms may be supported, and a graph processing request sent by a user is processed according to the graph analysis algorithm. In other words, in the existing graph database, after the graph processing request sent by the user is obtained, a graph analysis algorithm is determined from a plurality of existing graph analysis algorithms based on a type of the graph processing request, and the graph processing request is processed according to the graph analysis algorithm.

In the foregoing existing graph database, because types and a quantity of supported graph analysis algorithms are fixed, the existing graph database may determine only one graph analysis algorithm from the existing graph analysis algorithms, and process the graph processing request according to the graph analysis algorithm. Consequently, scalability is poor.

In view of this, an embodiment of this application provides a graph database. The database has good scalability in graph processing.

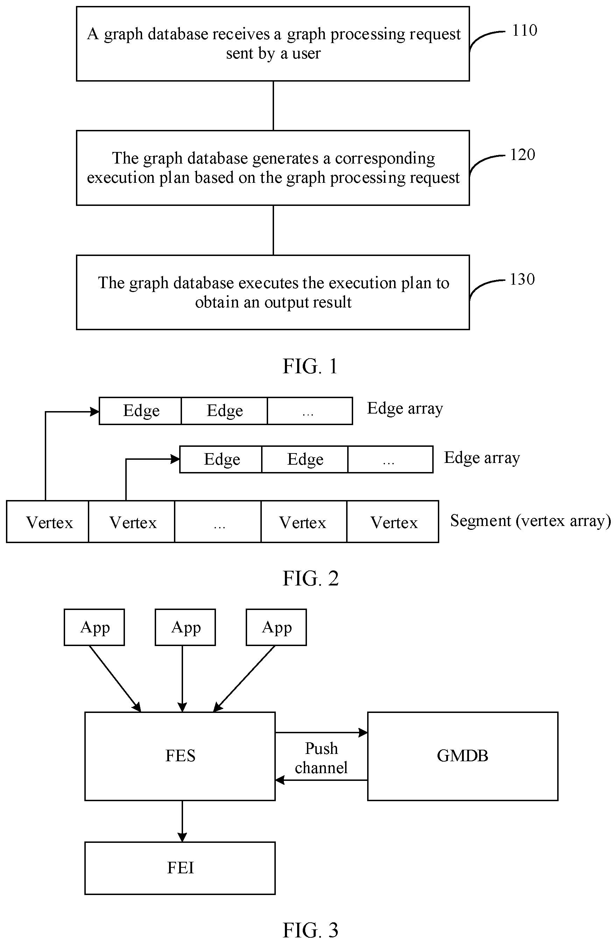

FIG. 1 is a schematic flowchart of a complex graph algorithm processing method in a graph database according to an embodiment of this application. As shown in FIG. 1, the method may include steps 110 to 130. The following separately describes steps 110 to 130 in detail.

Step 110: A graph database receives a graph processing request sent by a user.

The graph database stores graph data. The user may perform, via a client, an operation on graph data stored in the graph database, for example, perform an operation like adding, modifying, deleting, or querying on the stored graph data.

In an example, the graph database may receive, via the client, the graph processing request sent by the user. In an example, the graph processing request is a query request. For example, a shortest path query is performed on a piece of graph data stored in the graph database. For another example, a connectivity query is performed on a piece of graph data stored in the graph database.

It should be understood that the graph database provided in this embodiment of this application may support a plurality of languages. In other words, a language of the graph processing request sent by the user is not specifically limited in this embodiment of this application.

Step 120: The graph database generates a corresponding execution plan based on the graph processing request.

In this embodiment of this application, after receiving the graph processing request sent by the user, the graph database may generate the corresponding execution plan for the graph processing request. The execution plan may include one graph operator or a combination of a plurality of graph operators.

It should be understood that the graph processing request sent by the user may be considered as an operation on graph data stored in the graph database. Therefore, different operation types may be abstracted into a plurality of different graph operators based on different basic operation types of the graph data, and each graph operator may represent one operation type of the graph data. The plurality of different graph operators may also be referred to as a graph operator library. The graph database may determine, based on a specific graph processing request, one graph operator or a combination of a plurality of graph operators from the plurality of different graph operators included in the graph operator library. The one graph operator or the combination of the plurality of graph operators may be referred to as the execution plan generated for the graph processing request.

In some embodiments, because there is a dual relationship between a graph and a matrix, graph data may be represented by using a matrix in the graph database, and an operation on the graph data may be represented by an operation between matrices. Therefore, in this embodiment of this application, the foregoing different graph operators may represent different operation types between matrices.

In the foregoing solution in which a graph is represented by using a matrix, a graph algorithm may be implemented through a combination of matrix operations. The graph operator implemented based on the matrix may better utilize a parallelism feature of the matrix to achieve higher-performance graph processing.

In this embodiment of this application, if the execution plan includes the combination of the plurality of graph operators, the execution plan further includes an execution sequence of the plurality of graph operators. Each graph operator does not use an iterator. Instead, the graph operator processes all data at a time.

Optionally, in some embodiments, the execution plan further includes a relational operator, and the relational operator indicates that attribute data in the graph data is to be processed. For example, an operation like selection or projection is performed on the attribute data.

Optionally, in some embodiments, the matrix may represent one piece of graph data, and the graph data includes both attribute data and topology data. Therefore, to save storage space of the matrix, the matrix may be stored in a manner in which the attribute data and the topology data are separately stored. The attribute data in the matrix is stored in a form of a relational table. The topology data in the matrix may be stored in a form of matrix compression. For example, the matrix is compressed according to a compressed sparse row (compressed sparse row, CSR) algorithm.

For example, as shown in FIG. 2, an n*n matrix may be compressed into a 1*n matrix, that is, an array whose length is n, according to the CSR algorithm. Because the array is too long, the array may be divided into a plurality of segments in an implementation process. Each segment is a one-dimensional array with a fixed length, and the array may also be referred to as a vertex array. The vertex array includes n vertices (vertex), and each vertex may be represented by using a vertex ID. Each vertex may have an edge array, and each edge (edge) in the edge array represents all edges triggered by the vertex. In a possible implementation, the edge array on each vertex is stored in a form of a linked list, and a start pointer of the linked list is stored in the vertex.

There are two benefits of the foregoing manner of storing the topology data and the attribute data. One is a concept of the vertex ID. Each vertex has its own logical ID, where the logical ID includes a segment ID and an offset of the vertex on the segment. The other is that in a process of processing a complex graph algorithm based on topology data, a vertex ID is used to represent a specific vertex, and attribute data of the vertex does not need to be concerned. After the graph processing is complete, a physical address of the vertex is calculated based on the vertex ID as required by the user, to obtain a specific attribute value of the vertex.

Step 130: The graph database executes the execution plan to obtain an output result.

In this embodiment of this application, the graph database may obtain the output result by executing the foregoing generated execution plan. The graph database may further return the result to the user via the client.

It should be understood that, if the execution plan includes a combination of a plurality of graph operators, a prerequisite for combining the plurality of graph operators is that all the graph operators have a same input and output. In other words, input and output data formats of the plurality of graph operators are the same. For example, the execution plan includes two graph operators: a first graph operator and a second graph operator. An execution sequence of the two graph operators is that the first graph operator is executed before the second graph operator. An output of the first graph operator may be used as an input of the second graph operator, and a data format of the output of the first graph operator is the same as a data format of the input of the second graph operator.

Optionally, in this embodiment of this application, an intermediate result set is designed. The intermediate result set is a basic structure for data exchange between the plurality of graph operators in the execution plan. The intermediate result is compressed and stored by using a matrix, so that both the vertex data and the edge data may be stored. Each graph operator in the execution plan may obtain data from the intermediate result set as an input, and may further store, in the intermediate result set, full data output by the graph operator. The intermediate result set is transferred between the plurality of graph operators in the execution plan. Each graph operator traverses and modifies data in the intermediate result set according to a function of the graph operator.

For example, the intermediate result set may include a vertex array and an edge array. The vertex array stores an ID of each vertex and a location (or a range) of an edge triggered by the vertex in the edge array. The edge array stores an edge corresponding to each vertex. Specifically, the vertex array stores an ID of a destination vertex of each edge. It can be learned that the vertex array and the edge array in the intermediate result set form a graph, and both vertex data and edge data are stored in the graph.

In the foregoing technical solution, the graph database may obtain, in real time based on different graph processing requests, the execution plan corresponding to the graph processing request. The execution plan includes a combination of one or more graph operators obtained from the graph operator library. Therefore, the database has good scalability in graph processing.

The following lists several graph operators designed in this embodiment of this application by using an example in which a graph is represented by using a matrix. It should be understood that the following examples are merely intended to help a person skilled in the art understand this embodiment of this application, instead of limiting this embodiment of this application to a specific numerical value or a specific scenario shown in the examples. It is clear that a person skilled in the art may make various equivalent modifications or variations based on the following example. The modifications and changes also fall within the scope of embodiments of this application.

### 1. SpRef graph operator

The SpRef graph operator may also be referred to as a submatrix fetch operator. Because a matrix is usually very sparse, a submatrix needs to be extracted from the entire matrix during an operation. A corresponding submatrix is extracted, so that costs of the entire matrix operation can be reduced.

For example, sparse matrix B = SpRefA(p, q)) represents a SpRef graph operator, where A is an original matrix; p and q are vector indexes, and are used to specify a vector range for extracting a submatrix from a matrix A; SpRefA (p, q)) represents that the submatrix is extracted from the original matrix A based on the vector indexes p and q; and B is the submatrix extracted from the original matrix A.

It should be understood that the SpRef graph operator has a filtering function, and is used to filter graph data.

### 2. SpAsgn graph operator

The SpAsgn graph operator may also be referred to as a submatrix storage operator. For example, SpAsgnB (p, q) = A represents a SpAsgn graph operator, where B is a submatrix, A is an original matrix, and p and q are vector indexes, and are used to specify a vector range in which the submatrix B is stored in the original matrix A. SpAsgnB (p, q) = A indicates that the submatrix B is stored in the original matrix A based on the vector indexes p and q.

### 3. SpMV graph operator

The SpMV graph operator represents a matrix-vector multiplication operation, and is mainly used for traversal search on a graph. It should be understood that graph traversal and matrix-vector operation are in a dual relationship. Therefore, a next-hop traversal operation of the graph may be implemented through the matrix-vector multiplication operation. For example, y = Ax, where A is an original matrix that represents a graph, x is a start vertex vector that needs to be traversed, and y is an operation of multiplying the matrix by a vector, to implement a next-hop traversal search operation of the graph.

### 4. SpAdd graph operator

The SpAdd graph operator represents an operation between two matrices, for example, C = A ⊕ B, where C is an operation between a matrix A and a matrix B, and a specific operation type is determined by ⊕.

It should be understood that the matrix herein may alternatively be a vector, that is, the SpAdd graph operator represents an operation between two vectors.

For example, when ⊕ is addition, the SpAdd graph operator represents that two matrices are added, that is, two graphs corresponding to the two matrices are added. It is assumed that the two graphs corresponding to the two matrices each include a group of paths (paths). The SpAdd graph operator herein may be used to superimpose the two groups of paths in the two graphs.

For another example, when ⊕ is subtraction, the SpAdd graph operator represents that two matrices are subtracted, that is, two graphs corresponding to the two matrices are subtracted. It is assumed that the two graphs corresponding to the two matrices each include a group of paths (paths). The SpAdd graph operator herein may be used to subtract a group of paths in one graph from a group of paths in the other graph.

For another example, when ⊕ is multiplication, the SpAdd graph operator represents that two matrices are multiplied, that is, two graphs corresponding to the two matrices are multiplied, which is equivalent to an "AND" operation. It is assumed that the two graphs corresponding to the two matrices each include a group of paths (paths). The SpAdd graph operator herein may be used to return a common path in the two groups of paths.

### 5. SpGEMM graph operator

The SpGEMM graph operator represents a multiplication operation between two matrices. For example, C = AB. It is assumed that A is an original matrix corresponding to a graph, and B is a matrix corresponding to a start node on which next-hop traversal needs to be performed. A matrix C is obtained by performing a multiplication operation between the matrix A and the matrix B, where the matrix C represents next hops that are of all start nodes in the matrix B and that are obtained through traversal from the matrix A.

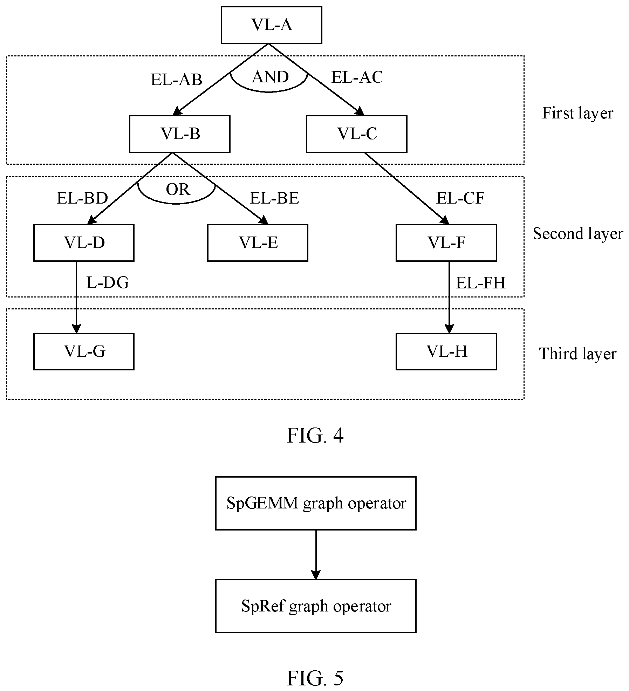

The following uses a service scenario shown in FIG. 3 as an example to describe in detail, with reference to FIG. 4 to FIG. 13, a specific implementation of a complex graph algorithm processing method in a graph database according to an embodiment of this application. It should be understood that examples in FIG. 4 to FIG. 13 are merely intended to help a person skilled in the art understand embodiments of this application, but are not intended to limit embodiments of this application to specific values or specific scenarios in the examples. It is clear that a person skilled in the art may make various equivalent modifications or changes based on the examples in FIG. 4 to FIG. 13 provided below. The modifications and changes also fall within the scope of embodiments of this application.

FIG. 3 is a block diagram of a router service scenario according to an embodiment of this application. As shown in FIG. 3, the router service scenario includes a router 300. The router 300 includes one or more service applications (application, APP), a forwarding engine service (forwarding engine service, FES), an FEI, and a graph database GMDB.

It should be understood that the graph database is not specifically limited in this embodiment of this application. In FIG. 3, the GMDB graph database is used as an example for description.

The service app is equivalent to the foregoing user, and may send a graph processing request to the FES.

The FES is configured to provide a forwarding management service for the router 300, and is equivalent to the foregoing client. The FES can exchange data with one or more service apps. For example, the FES process may receive graph processing requests sent by the one or more service apps, and send the graph processing requests to the GMDB.

The GMDB establishes a connection to the FES process, and is configured to receive a graph processing request sent by the FES process, process the graph processing request, and obtain a computation result of graph processing. The GMDB may further return the computation result of graph processing to the FES process through a push channel. With reference to a specific example, the following describes, by using an example, a specific implementation in which the GMDB processes the graph processing request and obtains the computation result of graph processing. Details are not described herein.

The FEI receives the computation result of graph processing that is sent by the FES process.

The following uses an example in which the graph processing request received by the GMDB is for querying connectivity of a path, to describe a specific implementation process in which the GMDB processes the graph processing request and obtains the computation result of graph processing.

It should be understood that, when the FES inserts/deletes a vertex on a path, if the path changes from connection to disconnection, or changes from disconnection to connection, the GMDB needs to be able to detect whether the path is connected, and notify the user of this information by using the FES. A path is a tree including a plurality of vertices and edges. Path connectivity means that if a leaf node of the tree can be reached starting from a root node of the tree, and a relationship between different edges is met (for example, an AND relationship exists between edges or an OR relationship exists between edges), it indicates that a connected path exists.

After obtaining a graph processing request for querying connectivity of a path, the GMDB may represent the path as a specific graph pattern (graph pattern) for a path query problem of a service. In this case, the path connectivity query becomes a connectivity determining problem of the graph. That is, whether a specific vertex is complete in a specific graph pattern (graph pattern) is determined from the vertex. For example, this problem may be resolved according to a graph traversal algorithm, for example, breadth-first search (breadth-first search, BFS).

For example, a possible graph mode is shown in FIG. 4. A path in the graph mode includes eight vertex labels (vertex label, VL) and seven edge labels (edge label, EL). Each VL represents a set of a plurality of vertices. In other words, each VL includes a plurality of vertices. In FIG. 4, the eight VLs are VL-A, VL-B, VL-C, VL-D, VL-E, VL-F, VL-G, VL-H, and the seven ELs are EL-AB, EL-AC, EL-BD, EL-BE, EL-CF, EL-DG, and EL-FH. In FIG. 4, it is assumed that an AND relationship exists between EL-AB and EL-AC, that is, VL-A is connected only when EL-AB and EL-AC coexist. It is assumed that there is an OR relationship between the EL-BD and the EL-BE, that is, the VL-B is connected as long as either the EL-BD or the EL-BE exists.

In this embodiment of this application, the GMDB may generate a corresponding execution plan for the graph processing request for querying connectivity of the path shown in FIG. 4. Because the BFS is hierarchical traversal, the graph mode shown in FIG. 4 may be divided into three layers. A traversal operation of each layer is implemented by a SpGEMM graph operator, and determining or filtering of a result of the SpGEMM graph operator is implemented by a SpRef graph operator.

In an example, for a first layer shown in FIG. 4, the GMDB may construct an execution plan shown in FIG. 5. The execution plan includes a SpGEMM graph operator and a SpRef graph operator. The SpGEMM graph operator is used to obtain edges starting from some of a plurality of vertices included in the VL-A of the first layer. Because there is an AND relationship between two edges (EL-AB and EL-AC) at the first layer, the SpRef graph operator is used to filter, based on the AND relationship, edges starting from some vertices in VL-A output by the SpGEMM graph operator.

It should be understood that, because the SpRef graph operator depends on the output of the SpGEMM graph operator, in the execution plan of the first layer, the SpGEMM graph operator may be executed before the SpRef graph operator.

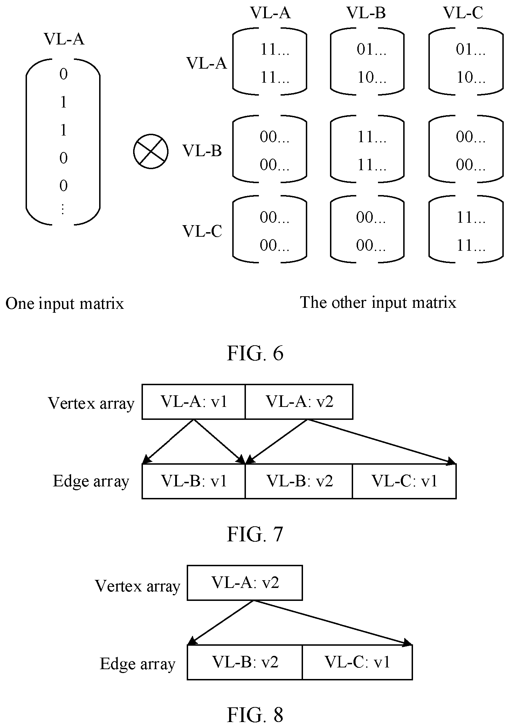

The following uses an example in which the SpGEMM graph operator obtains edges starting from a vertex v1 in VL-A (VL-A: v1) and a vertex v2 in VL-A (VL-A: v2) at the first layer. Two matrices are constructed as the input of the SpGEMM graph operator. As shown in FIG. 6, an input matrix of the SpGEMM graph operator is the vertex v1 in VL-A (VL-A: v1) and the vertex v2 in VL-A (VL-A: v2). The other input matrix of the SpGEMM graph operator is a topological matrix, and the topological matrix represents all vertices in VL-A and edges between all vertices in VL-B, and all the vertices in VL-A and edges between all vertices in VL-C. An output matrix is obtained after the SpGEMM graph operator performs an operation on the two input matrices. The output matrix represents an edge starting from the vertex v1 in VL-A (VL-A: v1) and an edge starting from the vertex v2 in VL-A (VL-A: v2). For example, a result of the output matrix is that: there is an edge between the vertex v1 in VL-A (VL-A: v1) and a vertex v1 in VL-B (VL-B: v1), there is an edge between the vertex v2 in the VL-A (VL-A: v2) and a vertex v2 in the VL-B (VL-B: v2), and there is an edge between the vertex v2 in the VL-A (VL-A: v2) and a vertex v1 in VL-C (VL-C: v1).

In this embodiment of this application, the output matrix obtained through executing of the SpGEMM graph operator may be further compressed and stored. As shown in FIG. 7, the output matrix obtained through executing of the SpGEMM graph operator may be compressed and stored in an intermediate result set. Refer to FIG. 7. The intermediate result set includes a vertex array and an edge array. The vertex array includes IDs of two vertices: VL-A: v1 and VL-A: v2. The edge array includes destination vertices of edges starting from VL-A: v1 and VL-A: v2, for example, VL-B: v1, VL-B: v2, and VL-C: v1. In the intermediate result set shown in FIG. 7, the vertex array further stores a range, in the edge array, of the edge starting from the vertex v1 in VL-A (VL-A: v1), and a range, in the edge array, of the edge starting from the vertex v2 in VL-A (VL-A: v2). For example, if a location of the edge starting from VL-A: v1 stored in the vertex array is 1 in the edge array, it indicates that there is one edge between VL-A: v1 and VL-B: v1. The range of the edge starting from VL-A: v2 stored in the vertex array is 2-3 in the edge array, indicating that there is one edge between VL-A: v2 and VL-B: v2 and there is one edge between VL-A: v2 and VL-C: v1.

The following uses an example in which the SpRef graph operator filters the output of the SpGEMM graph operator. Two matrices are constructed as an input of the SpRef graph operator. An input matrix of the SpRef graph operator is an output matrix of the SpGEMM graph operator, that is, the intermediate result set shown in FIG. 7. The other input matrix of the SpRef graph operator represents an AND relationship needs to be met between an edge (EL-AB) that is between VL-A and VL-B and an edge (EL-AC) that is between VL-A and VL-C. In other words, there needs to be an edge between a vertex in VL-A and a vertex in VL-B, and there needs to be an edge between a vertex in VL-A and a vertex in the VL-C. It can be learned from the intermediate result set shown in FIG. 7 that there is one edge between the vertex v1 in VL-A (VL-A: v1) and the vertex v1 in VL-B (VL-B: v1), but there is no edge between VL-A: v1 and the vertex v1 in VL-C (VL-C: v1). Therefore, it is determined that the vertex v1 in VL-A (VL-A: v1) does not meet the AND relationship. There is one edge between the vertex v2 in VL-A (VL-A: v2) and the vertex v2 in VL-B (VL-B: v2), and there is one edge between VL-A: v2 and the vertex v1 in VL-C (VL-C: v1). Therefore, the vertex v2 in VL-A (VL-A: v2) satisfies the AND relationship. Therefore, after the SpRef graph operator filters the output of the SpGEMM graph operator, the VL-A: v1 and the edge from the VL-A: v1 to the VL-B: v1 in the intermediate result set shown in FIG. 7 may be deleted. An intermediate result set output by the SpRef graph operator is shown in FIG. 8. The intermediate result set includes VL-A: v2, an edge between VL-A: v2 and VL-B: v2, and an edge between VL-A: v2 and VL-C: v1.

In another example, for a second layer shown in FIG. 4, similarly, an execution plan constructed by the GMDB is the same as the execution plan constructed at the first layer shown in FIG. 5, and includes a SpGEMM graph operator and a SpRef graph operator, but computation results are different. The SpGEMM graph operator in the execution plan at the second layer is used to obtain an edge starting from a vertex v2 in VL-B (VL-B: v2) and an edge starting from a vertex v1 in VL-C (VL-C: v1) in the intermediate result set shown in FIG. 8. Because there is an OR relationship between two edges (EL-BD and EL-BE) at the second layer, the SpRef graph operator is used to filter, based on the OR relationship, the edges that are output by the SpGEMM graph operator and that start from the vertex v2 in VL-B (VL-B: v2) and the vertex v1 in VL-C (VL-C: v1).

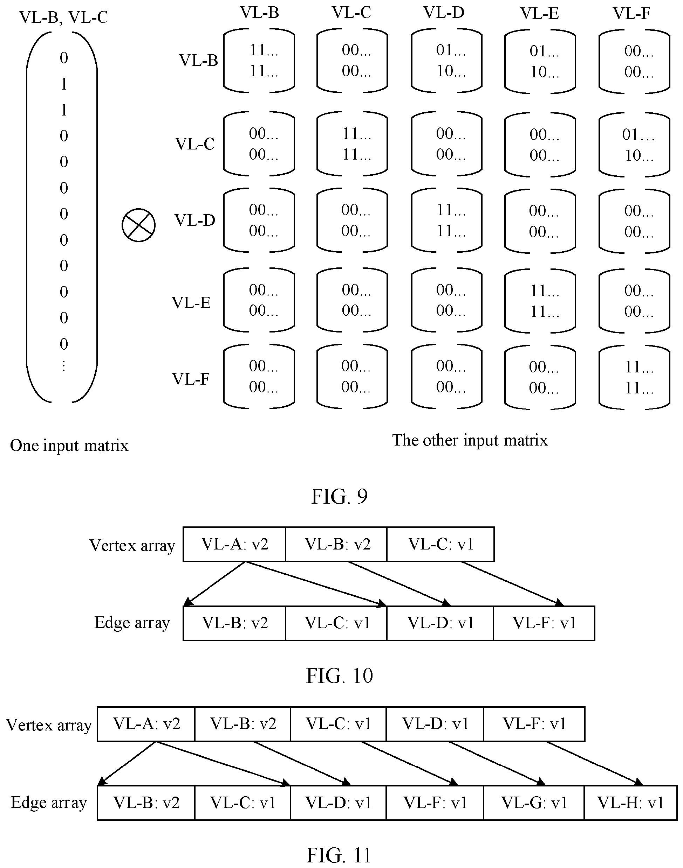

The following uses an example in which the SpGEMM graph operator obtains the edges starting from the vertex v2 in VL-B (VL-B: v2) and the vertex v1 in VL-C (VL-C: v1) at the second layer. Two matrices are constructed as the input of the SpGEMM graph operator. As shown in FIG. 9, an input matrix of the SpGEMM graph operator is the vertex v2 in VL-B (VL-B: v2) and the vertex v1 in VL-C (VL-C: v1). The other input matrix of the SpGEMM graph operator is a topological matrix, and the topological matrix represents edges between all vertices in VL-B and all vertices in VL-D, edges between all the vertices in VL-B and all vertices in VL-E, and edges between all vertices in VL-C and all vertices in VL-F. An output matrix is obtained after the SpGEMM graph operator performs an operation on the two input matrices. The output matrix represents an edge starting from the vertex v2 in VL-B (VL-B: v2) and an edge starting from the vertex v1 in VL-C (VL-C: v1). For example, a result of the output matrix is that: there is an edge between the vertex v2 in VL-B (VL-B: v2) and the vertex v1 in VL-D (VL-D: v1), and there is an edge between the vertex v1 in VL-C (VL-C: v1) and a vertex v1 in VL-F (VL-F: v1).

In this embodiment of this application, the output matrix obtained through executing of the SpGEMM graph operator in the execution plan at the second layer may be further compressed and stored. For example, the output matrix obtained through executing of the SpGEMM graph operator may be compressed and stored in the intermediate result set shown in FIG. 8, to obtain an intermediate result set shown in FIG. 10. Refer to FIG. 10. Based on the intermediate result set shown in FIG. 8, IDs of two vertices are added to the vertex array, and are respectively VL-B: v2 and VL-C: v1; and destination vertices of edges starting from VL-B: v2 and VL-C: v1 are added to the edge array, for example, VL-D: v1 and VL-F: v1. Similarly, in the intermediate result set shown in FIG. 10, the vertex array further stores a range, in the edge array, of the edge starting from the vertex v2 in VL-B (VL-B: v2), a range, in the edge array, of the edge starting from the vertex v1 in VL-C (VL-C: v1). For example, if a location of the edge starting from VL-B: v2 stored in the vertex array is 3 in the edge array, it indicates that there is one edge between VL-B: v2 and VL-D: v1 in the edge array. If a location of the edge starting from VL-C: v1 stored in the vertex array is 4 in the edge array, it indicates that there is one edge between VL-C: v1 and VL-F: v1 in the edge array.

The following uses an example in which the SpRef graph operator in the execution plan at the second layer filters the output of the SpGEMM graph operator. Two matrices are constructed as an input of the SpRef graph operator in the execution plan at the second layer. An input matrix of the SpRef graph operator is an output matrix of the SpGEMM graph operator, that is, the intermediate result set shown in FIG. 10. The other input matrix of the SpRef graph operator represents that an OR relationship needs to be met between an edge (EL-BD) that is between VL-B and VL-D and an edge (EL-BE) that is between VL-B and VL-E. In other words, there needs to be an edge between a vertex in VL-B and a vertex in VL-D or VL-E. It can be learned from the intermediate result set shown in FIG. 10 that there is one edge between the vertex v2 in VL-B (VL-B: v2) and the vertex v1 in VL-D (VL-D: v1). Therefore, the output of the SpRef graph operator is the same as the intermediate result set shown in FIG. 10.

In another example, for a third layer shown in FIG. 4, similarly, an execution plan constructed by the GMDB is the same as the execution plan constructed at the first layer shown in FIG. 5, and includes a SpGEMM graph operator and a SpRef graph operator, but computation results are different. The SpGEMM graph operator in the execution plan at the second layer is used to obtain an edge starting from a vertex v1 in VL-D (VL-D: v1) and an edge starting from a vertex v1 in VL-F (VL-F: v1) in the intermediate result set shown in FIG. 10. The SpRef graph operator is used to filter the edges that are output by the SpGEMM graph operator and that start from the vertex v1 in VL-D (VL-D: v1) and the vertex v1 in VL-F (VL-F: v1). A specific implementation process is similar to the foregoing computation process of the first layer and the foregoing computation process of the second layer. For details, refer to the foregoing descriptions. Details are not described herein again.

In this embodiment of this application, the SpRef graph operator at the third layer may compress the output matrix and store the compressed matrix in the intermediate result set shown in FIG. 10, to obtain an intermediate result set shown in FIG. 11. Refer to FIG. 11. Based on the intermediate result set shown in FIG. 10, IDs of two vertices are added to the vertex array, and are respectively VL-D: v1 and VL-F: v1; and destination vertices of the edges starting from VL-D: v1 and VL-F: v1 are added to the edge array, for example, the vertex v1 in VL-G (VL-G: v1) and the vertex v1 in VL-H (VL-H: v1). Similarly, in the intermediate result set shown in FIG. 11, the vertex array further stores a range, in the edge array, of the edge starting from VL-D: v1, and a range, in the edge array, of the edge starting from VL-F: v1. For example, if a location of the edge starting from VL-D: v1 stored in the vertex array is 5 in the edge array, it indicates that there is one edge between VL-D: v1 and VL-G: v1 in the edge array. If a location of the edge starting from VL-F: v1 stored in the vertex array is 6 in the edge array, it indicates that there is an edge between VL-F: v1 and VL-H: v1 in the edge array.

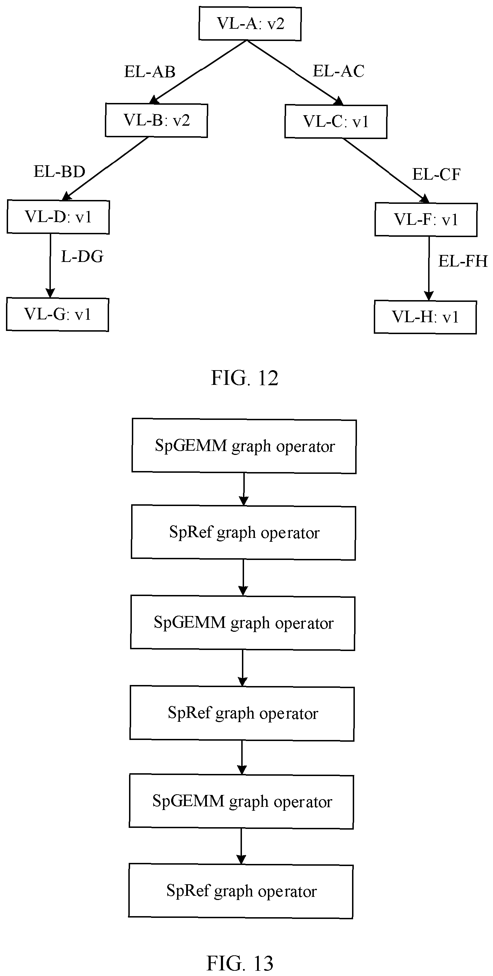

The intermediate result set shown in FIG. 11 corresponds to a connected path instance. For example, as shown in FIG. 12, there is an edge EL-AB between a vertex v2 in VL-A (VL-A: v2) and a vertex v2 in VL-B (VL-B: v2), there is an edge EL-AC between the vertex v2 in VL-A (VL-A: v2) and a vertex v1 in VL-C (VL-C: v1), there is an edge EL-BD between the vertex v2 in VL-B (VL-B: v2) and a vertex v1 in VL-D (VL-D: v1), there is an edge EL-CF between the vertex v1 in the VL-C (VL-C: v1) and a vertex v1 in the VL-F (VL-F: v1), there is an edge EL-DG between the vertex v1 in the VL-D (VL-D: v1) and a vertex v1 in the VL-G (VL-G: v1), and there is an edge EL-FH between the vertex v1 in VL-F (VL-F: v1) and a vertex v1 in VL-H (VL-H: v1).

FIG. 13 shows an execution plan constructed by the GMDB for the graph mode shown in FIG. 4 according to an embodiment of this application. The execution plan includes the execution plan of the first layer, the execution plan of the second layer, and the execution plan of the third layer, that is, includes three SpGEMM graph operators and three SpRef graph operators. In addition, after the execution plan at the first layer is executed, the execution plan at the second layer is executed, and then the execution plan at the third layer is executed. Therefore, the graph operators included in the execution plan shown in FIG. 13 also have a specific execution sequence, that is, are executed in the following sequence: SpGEMM graph operator, SpRef graph operator, SpGEMM graph operator, SpRef graph operator, SpGEMM graph operator, and SpRef graph operator.

In the foregoing technical solution, the graph database that uses the matrix operation completes graph completeness determining in graph processing through the graph operator. This ensures high-performance graph processing and ensures system scalability.

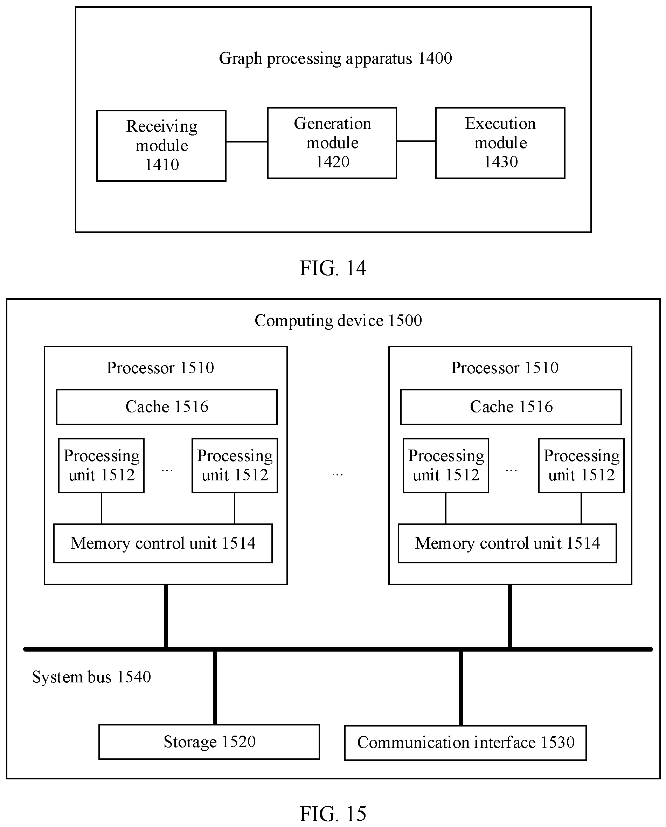

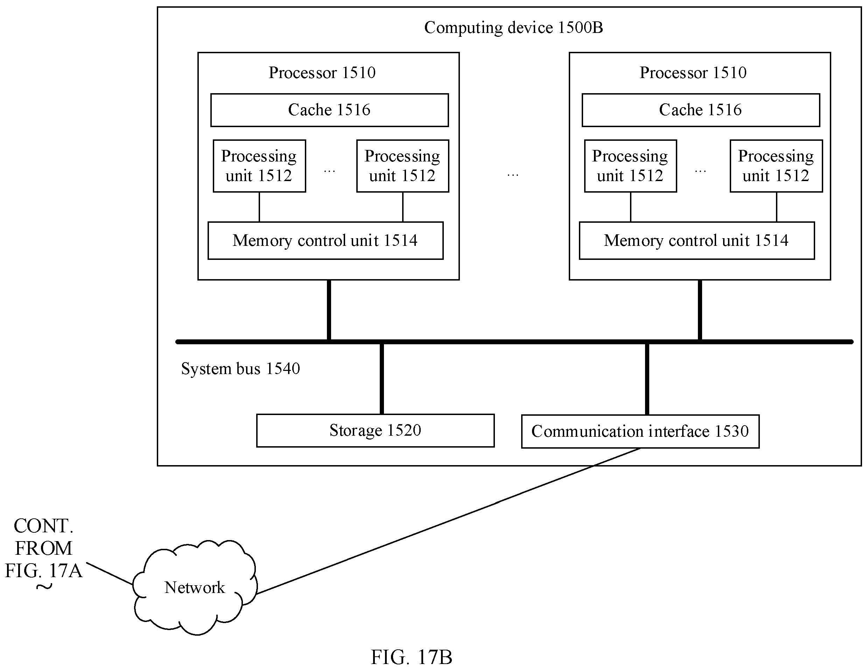

The foregoing describes in detail the methods according to embodiments of this application with reference to FIG. 1 to FIG. 13. The following describes in detail apparatus embodiments of this application with reference to FIG. 14 to FIG. 17A and FIG. 17B. It should be understood that descriptions of the method embodiments correspond to descriptions of the apparatus embodiments. Therefore, for a part that is not described in detail, refer to the foregoing method embodiments.

FIG. 14 is a block diagram of a complex graph algorithm processing apparatus 1400 according to an embodiment of this application. The complex graph algorithm processing apparatus 1400 may be implemented through software, hardware, or a combination thereof. The complex graph algorithm processing apparatus 1400 provided in this embodiment of this application may implement the method processes shown in FIG. 1 to FIG. 13 in embodiments of this application. The complex graph algorithm processing apparatus 1400 includes a receiving module 1410, a generation module 1420, and an execution module 1430. The receiving module 1410 is configured to receive a request that is for a complex graph algorithm and that is sent by a user, where the request is used to obtain a computation result of the complex graph algorithm. The generation module 1420 is configured to convert, based on the request for the complex graph algorithm, the complex graph algorithm into a physical plan including n graph operators, where each graph operator represents one matrix operation, and n is an integer greater than or equal to 1. The execution module 1430 is configured to perform n matrix operations corresponding to the n graph operators in the physical plan, to obtain the computation result of the graph algorithm.

Optionally, the physical plan further includes an execution sequence of the n graph operators.

Optionally, the physical plan includes a first graph operator and a second graph operator, an output matrix of the first graph operator is an input matrix of the second graph operator, and a data format of the output matrix of the first graph operator is the same as a data format of the input matrix of the second graph operator.

Optionally, the output matrix of the first graph operator is stored in first storage space in a matrix compression manner.

Optionally, the first storage space includes at least one vertex array and at least one edge array, the vertex array includes identifiers IDs of a plurality of vertices in a graph corresponding to the first graph data, and the edge array includes an edge starting from each vertex.

Optionally, the matrix is stored in second storage space in the matrix compression manner.

Optionally, the second storage space includes at least one vertex array and at least one edge array, the vertex array includes IDs of a plurality of vertices in a graph corresponding to the matrix, each vertex corresponds to one edge array, and the edge array is stored in the second storage space in a form of a linked list.

Optionally, the complex graph algorithm includes the first graph data, the first graph data includes attribute data and topology data, the attribute data represents an attribute of a vertex or an edge in the graph corresponding to the first graph data, and the topology data represents an association relationship between the vertices in the graph.

Optionally, the receiving module 1410 is specifically configured to receive, via a client, the request that is for the complex graph algorithm and that is sent by the user.

Optionally, the apparatus 1400 further includes a sending module 1440, configured to return the computation result of the graph algorithm to the user via the client.

The complex graph algorithm processing apparatus 1400 herein may be embodied in a form of a functional module. The term "module" herein may be implemented in a form of software and/or hardware, and this is not specifically limited.

For example, the "module" may be a software program, a hardware circuit, or a combination thereof that implements the foregoing functions. For example, the following uses the receiving module as an example to describe an implementation of the receiving module. Similarly, for an implementation of another module, for example, the generation module or the execution module, refer to the implementation of the receiving module.

As an example of a software functional unit, the receiving module may include code running on a computing instance. The computing instance may include at least one of a physical host (a computing device), a virtual machine, and a container. Further, there may be one or more computing instances. For example, the receiving module may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

As an example of a hardware function unit, the receiving module may include at least one computing device, for example, a server. Alternatively, the receiving module may be a device implemented through an application-specific integrated circuit (application-specific integrated circuit, ASIC) or a programmable logic device (programmable logic device, PLD), or the like. The PLD may be implemented by a complex programmable logic device (complex programmable logical device, CPLD), a field-programmable gate array (field-programmable gate array, FPGA), generic array logic (generic array logic, GAL), or any combination thereof.

The plurality of computing devices included in the receiving module may be distributed in a same region, or may be distributed in different regions. The plurality of computing devices included in the receiving module may be distributed in a same AZ, or may be distributed in different AZs. Similarly, a plurality of computing devices included in the receiving module may be distributed in a same VPC, or may be distributed in a plurality of VPCs. The plurality of computing devices may be any combination of computing devices such as a server, an ASIC, a PLD, a CPLD, an FPGA, and a GAL.

Therefore, modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that: When the complex graph algorithm processing apparatus provided in the foregoing embodiment performs the foregoing method, division of the foregoing functional modules is merely used as an example for description. In actual application, the foregoing functions may be allocated to different functional modules for implementation based on a requirement, that is, an internal structure of the apparatus is divided into different functional modules, to complete all or some of the functions described above. For example, the receiving module may be configured to perform any step in the complex graph algorithm processing method in the graph database, the generation module may be configured to perform any step in the complex graph algorithm processing method in the graph database, and the execution module may be configured to perform any step in the complex graph algorithm processing method in the graph database. Steps that the receiving module, the generation module, and the execution module are responsible for implementing may be specified based on a requirement. The receiving module, the generation module, and the execution module respectively implement different steps in the complex graph algorithm processing method in the graph database, to implement all functions of the complex graph algorithm processing apparatus.

In addition, the foregoing embodiment of the complex graph algorithm processing apparatus and the embodiment of the complex graph algorithm processing method in a graph database belong to a same concept. For a specific implementation process of the apparatus, refer to the foregoing method embodiment. Details are not described herein again.

The complex graph algorithm processing method in the graph database according to embodiments of this application may be performed by a computing device, and the computing device may also be referred to as a computer system. The computing device may include a hardware layer, an operating system layer running above the hardware layer, and an application layer running above the operating system layer. The hardware layer includes hardware, for example, a processing unit, a memory, and a memory control unit. Subsequently, functions and structures of the hardware are described in detail. The operating system is any one or more computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, optionally, the computer system is a handheld device, for example, a smartphone, or a terminal device, for example, a personal computer. This is not particularly limited in this application, provided that the method according to embodiments of this application can be used. The complex graph algorithm processing method in a graph database according to this embodiment of this application may be performed by a computing device, or a functional module that can invoke and execute a program in a computing device.

The following describes in detail a computing device provided in an embodiment of this application with reference to FIG. 15.

FIG. 15 is a diagram of an architecture of a computing device 1500 according to an embodiment of this application. The computing device 1500 may be a server, a computer, or another device with a computing capability. The computing device 1500 shown in FIG. 15 includes at least one processor 1510 and a storage 1520.

It should be understood that quantities of processors and storages in the computing device 1500 are not limited in this application.

The processor 1510 executes instructions in the storage 1520, so that the computing device 1500 implements the method provided in this application. Alternatively, the processor 1510 executes the instructions in the storage 1520, so that the computing device 1500 implements the function modules provided in this application, to implement the method provided in this application.

Optionally, the computing device 1500 further includes a communication interface 1530. The communication interface 1530 uses a transceiver module, for example but not limited to, a network interface card or a transceiver, to implement communication between the computing device 1500 and another device or a communication network.

Optionally, the computing device 1500 further includes a system bus 1540. The processor 1510, the storage 1520, and the communication interface 1530 are separately connected to the system bus 1540. The processor 1510 can access the storage 1520 through the system bus 1540. For example, the processor 1510 can perform data reading/writing or code execution in the storage 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one thick line is used to represent the bus in FIG. 15, but this does not mean that there is only one bus or only one type of bus.

In a possible implementation, the processor 1510 mainly functions to interpret instructions (or code) of a computer program and process data in computer software. The instructions of the computer program and the data in the computer software may be stored in the storage 1520 or a cache 1516.

Optionally, the processor 1510 may be an integrated circuit chip and has a signal processing capability. As an example rather than a limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a core, and is a most important component of the processor. The processing unit 1512 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1514 is configured to control data exchange between the storage 1520 and the processing unit 1512. Specifically, the memory control unit 1514 receives a memory access request from the processing unit 1512, and controls access to a memory based on the memory access request. As an example rather than a limitation, the memory control unit is a device, for example, a memory management unit (memory management unit, MMU).

In an implementation example, each memory control unit 1514 performs addressing for the storage 1520 through the system bus. In addition, an arbiter (not shown in FIG. 15) is configured in the system bus, and the arbiter is responsible for processing and coordinating contention access of the plurality of processing units 1512.

In an implementation example, the processing unit 1512 and the memory control unit 1514 are communicatively connected through a connection line like an address line inside a chip, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for required data. If the required data is found, the processing unit 1512 directly reads the data. If the required data is not found, the processing unit 1512 searches the storage for the required data. Because the cache runs much faster than the storage, a function of the cache is to help the processing unit 1512 run faster.

The storage 1520 can provide running space for a process in the computing device 1500. For example, the storage 1520 stores a computer program (specifically, code of the program) used to generate the process. After the computer program is run by the processor to generate the process, the processor allocates corresponding storage space to the process in the storage 1520. Further, the storage space further includes a text segment, an initial data segment, an uninitialized data segment, a stack segment, a heap segment, and the like. The storage 1520 stores, in the storage space corresponding to the process, data generated during running of the process, for example, intermediate data or process data.

Optionally, the storage is also referred to as a memory, and is configured to temporarily store operation data in the processor 1510 and data exchanged with an external storage, for example, a hard disk. Provided that the computer runs, the processor 1510 schedules, to the memory for an operation, data on which the operation needs to be performed, and the processing unit 1512 sends a result after the operation is completed.

As an example rather than a limitation, the storage 1520 is a volatile storage or a nonvolatile storage, or may include both a volatile storage and a nonvolatile storage. The nonvolatile storage is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage is a random access memory (random access memory, RAM) and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the storage 1520 in the system and method described in this specification is intended to include but is not limited to these storages and any storage of another proper type.

The foregoing listed structure of the computing device 1500 is merely an example for description, and this application is not limited thereto. The computing device 1500 in this embodiment of this application includes various hardware in a computer system in the conventional technology. For example, the computing device 1500 further includes a storage other than the storage 1520, for example, a magnetic disk memory. A person skilled in the art should understand that the computing device 1500 may further include another component required for implementing normal running. In addition, according to a specific requirement, a person skilled in the art should understand that the computing device 1500 may further include a hardware component for implementing another additional function. In addition, a person skilled in the art should understand that the computing device 1500 may include only a component necessary for implementing this embodiment of this application, but does not necessarily include all the components shown in FIG. 15.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

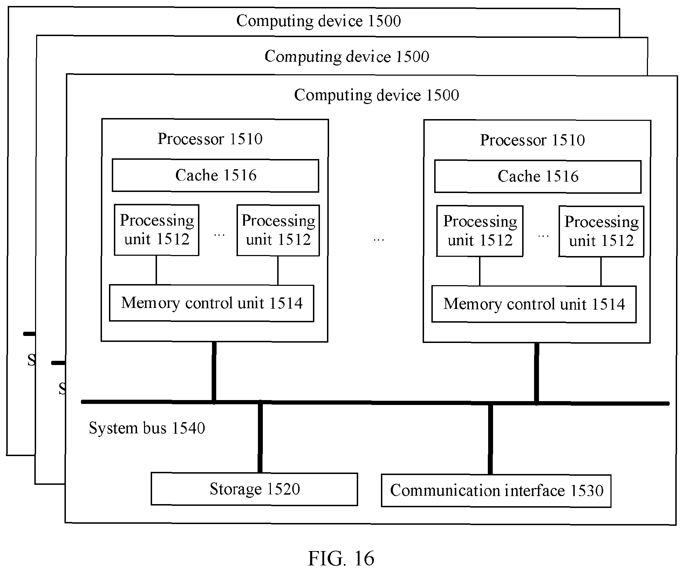

As shown in FIG. 16, the computing device cluster includes at least one computing device 1500. The storage 1520 in one or more computing devices 1500 in the computing device cluster may store same instructions used to perform the foregoing method.

In some possible implementations, the storage 1520 in each of the one or more computing devices 1500 in the computing device cluster may store some instructions used to perform the foregoing method. In other words, a combination of the one or more computing devices 1500 may jointly execute the instructions of the foregoing method.

It should be noted that storages 1520 in different computing devices 1500 in the computing device cluster may store different instructions, and the different instructions are separately used to perform some functions of the complex graph algorithm processing apparatus. In other words, the instructions stored in the storages 1520 in the different computing devices 1500 may implement functions of one or more modules in the complex graph algorithm processing apparatus.

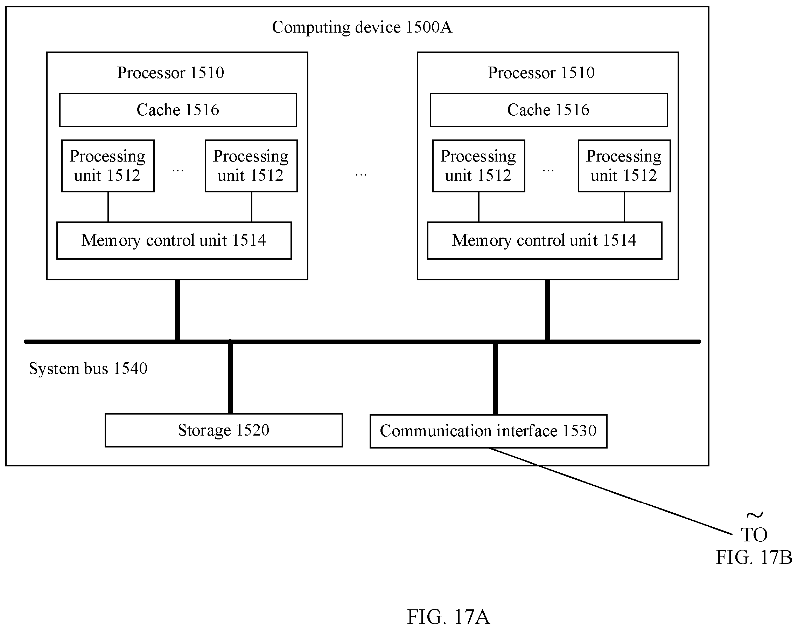

In some possible implementations, the one or more computing devices in the computing device cluster may be connected through a network. The network may be a wide area network, a local area network, or the like. FIG. 17A and FIG. 17B show a possible implementation. As shown in FIG. 17A and FIG. 17B, two computing devices 1500A and 1500B are connected through a network. Specifically, each computing device is connected to the network through a communication interface of the computing device.

It should be understood that functions of the computing device 1500A shown in FIG. 17A and FIG. 17B may alternatively be completed by a plurality of computing devices 1500. Similarly, functions of the computing device 1500B may alternatively be completed by a plurality of computing devices 1500.

In this embodiment, a computer program product including instructions is further provided. The computer program product may be software or a program product that includes the instructions and that can run on a computing device or be stored in any available medium. When the computer program product runs on a computing device, the computing device is enabled to perform the method provided above, or the computing device is enabled to implement functions of the apparatus provided above.

In this embodiment, a computer program product including instructions is further provided. The computer program product may be software or a program product that includes the instructions and that can run on a computing device cluster or that is stored in any available medium. When the computer program product runs on the computing device cluster, the computing device cluster is enabled to perform the method provided above, or the computing device cluster is enabled to implement functions of the apparatus provided above.

In this embodiment, a computer-readable storage medium is further provided. The computer-readable storage medium may be any available medium that can be stored by a computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed on the computing device, the computing device is enabled to perform the method provided above.

In this embodiment, a computer-readable storage medium is further provided. The computer-readable storage medium may be any available medium that can be stored by a computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed by the computing device cluster, the computing device cluster is enabled to perform the method provided above.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A complex graph algorithm processing method, comprising:
receiving, by a graph database, a request that is for a complex graph algorithm and that is sent by a user, wherein the request is used to obtain a computation result of the complex graph algorithm;
converting, by the graph database based on the request for the complex graph algorithm, the complex graph algorithm into a physical plan comprising n graph operators, wherein each graph operator represents one matrix operation, and n is an integer greater than or equal to 1; and
performing, by the graph database, n matrix operations corresponding to the n graph operators in the physical plan, to obtain the computation result of the graph algorithm.

2. The method according to claim 1, wherein the physical plan further comprises an execution sequence of the n graph operators.

3. The method according to claim 1 or 2, wherein the physical plan comprises a first graph operator and a second graph operator, an output matrix of the first graph operator is an input matrix of the second graph operator, and a data format of the output matrix of the first graph operator is the same as a data format of the input matrix of the second graph operator.

4. The method according to claim 3, wherein the output matrix of the first graph operator is stored in first storage space in a matrix compression manner.

5. The method according to claim 4, wherein the first storage space comprises at least one vertex array and at least one edge array, the vertex array comprises identifiers IDs of a plurality of vertices in a graph corresponding to the first graph data, and the edge array comprises an edge starting from each vertex.

6. The method according to any one of claims 1 to 5, wherein the matrix is stored in second storage space in the matrix compression manner.

7. The method according to claim 6, wherein the second storage space comprises at least one vertex array and at least one edge array, the vertex array comprises IDs of a plurality of vertices in a graph corresponding to the matrix, each vertex corresponds to one edge array, and the edge array is stored in the second storage space in a form of a linked list.

8. The method according to any one of claims 1 to 7, wherein the complex graph algorithm comprises the first graph data, the first graph data comprises attribute data and topology data, the attribute data represents an attribute of a vertex or an edge in the graph corresponding to the first graph data, and the topology data represents an association relationship between the vertices in the graph.

9. The method according to any one of claims 1 to 8, wherein the receiving, by a graph database, a request that is for a complex graph algorithm and that is sent by a user comprises:
receiving, by the graph database via a client, the request that is for the complex graph algorithm and that is sent by the user.

10. The method according to any one of claims 1 to 9, wherein the method further comprises:
returning, by the graph database, the computation result of the graph algorithm to the user via the client.

11. A complex graph algorithm processing apparatus, comprising:
a receiving module, configured to receive a request that is for a complex graph algorithm and that is sent by a user, wherein the request is used to obtain a computation result of the complex graph algorithm;
a generation module, configured to convert, based on the request for the complex graph algorithm, the complex graph algorithm into a physical plan comprising n graph operators, wherein each graph operator represents one matrix operation, and n is an integer greater than or equal to 1; and
an execution module, configured to perform n matrix operations corresponding to the n graph operators in the physical plan, to obtain the computation result of the graph algorithm.

12. The apparatus according to claim 11, wherein the physical plan further comprises an execution sequence of the n graph operators.

13. The apparatus according to claim 11 or 12, wherein the physical plan comprises a first graph operator and a second graph operator, an output matrix of the first graph operator is an input matrix of the second graph operator, and a data format of the output matrix of the first graph operator is the same as a data format of the input matrix of the second graph operator.

14. The apparatus according to claim 13, wherein the output matrix of the first graph operator is stored in first storage space in a matrix compression manner.

15. The apparatus according to claim 14, wherein the first storage space comprises at least one vertex array and at least one edge array, the vertex array comprises identifiers IDs of a plurality of vertices in a graph corresponding to the first graph data, and the edge array comprises an edge starting from each vertex.

16. The apparatus according to any one of claims 11 to 15, wherein the matrix is stored in second storage space in the matrix compression manner.

17. The apparatus according to claim 16, wherein the second storage space comprises at least one vertex array and at least one edge array, the vertex array comprises IDs of a plurality of vertices in a graph corresponding to the matrix, each vertex corresponds to one edge array, and the edge array is stored in the second storage space in a form of a linked list.

18. The apparatus according to any one of claims 11 to 17, wherein the complex graph algorithm comprises the first graph data, the first graph data comprises attribute data and topology data, the attribute data represents an attribute of a vertex or an edge in the graph corresponding to the first graph data, and the topology data represents an association relationship between the vertices in the graph.

19. The apparatus according to any one of claims 11 to 18, wherein the receiving module is specifically configured to receive, via a client, the request that is for the complex graph algorithm and that is sent by the user.

20. The apparatus according to any one of claims 11 to 19, wherein the apparatus further comprises:
a sending module, configured to return the computation result of the graph algorithm to the user via the client.

21. A computing device, comprising a processor and a storage, wherein the processor is configured to execute instructions stored in the storage, so that the computing device performs the method according to any one of claims 1 to 10.

22. A computing device cluster, comprising at least one computing device, wherein each computing device comprises a processor and a storage; and
the processor in the at least one computing device is configured to execute instructions stored in the storage in the at least one computing device, so that the computing device cluster performs the method according to any one of claims 1 to 10.

23. A computer program product comprising instructions, wherein when the instructions are run by a computing device, the computing device is enabled to perform the method according to any one of claims 1 to 10.

24. A computer program product comprising instructions, wherein when the instructions are run by a computing device cluster, the computing device cluster is enabled to perform the method according to any one of claims 1 to 10.

25. A computer-readable storage medium, comprising computer program instructions, wherein when the computer program instructions are executed by a computing device, the computing device performs the method according to any one of claims 1 to 10.

26. A computer-readable storage medium, comprising computer program instructions, wherein when the computer program instructions are executed by a computing device cluster, the computing device cluster performs the method according to any one of claims 1 to 10.
